# EUROPÄISCHE PATENTSCHRIFT

(11) **EP 2 163 442 B1**
(45) Veröffentlichungstag und Bekanntmachung des Hinweises auf die Patenterteilung: **01.02.2012**
(21) Anmeldenummer: 09170027.8
(22) Anmeldetag: 11.09.2009
(51) Int. Cl.: B60S 3/00, B65G 17/38, B65G 17/44

(54) **Felgenschutzvorrichtung sowie Vorrichtung zum Fördern eines Kraftfahrzeuges in einer Fahrzeugbehandlungsanlage**
Wheel rim protection device and device for transporting a motor vehicle in a vehicle handling plant
Dispositif de protection des jantes et dispositif de transport d'un véhicule automobile dans une installation de traitement de véhicules

(30) Priorität: 12.09.2008 DE 102008042034
(43) Veröffentlichungstag der Anmeldung: 17.03.2010
(73) Patentinhaber: Otto Christ AG, Autowaschanlagen, 87700 Memmingen (DE)
(72) Erfinder: CHRIST, Markus, 87700, Memmingen (DE)
(74) Vertreter: Peckmann, Ralf

(56) Entgegenhaltungen:
- EP-A1- 0 703 163
- EP-A1- 1 818 290
- DE-U1- 20 314 114

## Beschreibung

Die vorliegende Erfindung bezieht sich auf eine Felgenschutzvorrichtung zum Schutze einer Kraftfahrzeugfelge während eines Fördervorgangs eines Kraftfahrzeuges in einer mindestens eine Förderkette aufweisenden Fahrzeugbehandlungsanlage sowie auf eine Vorrichtung zum Fördern eines Kraftfahrzeuges in einer Fahrzeugbehandlungsanlage.

Obwohl auf beliebige Fahrzeugbehandlungsanlagen anwendbar, werden die vorliegende Erfindung sowie die ihr zugrundeliegende Problematik in Bezug auf eine Autowaschanlage näher erläutert. Dies ist allerdings nicht als abschließend zu verstehen, da der Gegenstand der vorliegenden Erfindung beispielsweise auch auf Fahrzeugwartungsanlagen, Fahrzeugfertigungsanlagen, Polieranlagen oder dergleichen übertragbar ist.

Es sind beispielsweise Autowaschanlagen als sogenannte Waschstraßen vom Durchfahr-Typ bekannt, bei welchen ein zu waschendes Fahrzeug in die Autowaschanlage von der Vorderseite eintritt und nach Beendigung des Waschvorgangs die Autowaschanlagen an der Rückseite wieder verlässt. Dabei ist die Autowaschanlage im Allgemeinen innen mit einem Waschabschnitt, einem Wachsabschnitt und einem Trocknungsabschnitt, angeordnet in dieser Reihenfolge von der Vorderseite zur Rückseite, ausgestaltet. Der Waschabschnitt ist beispielsweise ausgestattet mit Waschbürsten zum Waschen der Oberfläche des Fahrzeugs, einer Sprüheinrichtung zum Sprühen von Waschwasser und einem Reinigungsmittel auf die Oberfläche des Fahrzeugs, etc. Der Wachsabschnitt ist ausgestattet mit einer Sprüheinrichtung zum Sprühen eines Flüssigwachses auf die Oberfläche des Fahrzeugs und mit Waschbürsten oder dergleichen. Der Trocknungsabschnitt schließlich ist beispielsweise ausgestattet mit Trocknungsdüsen zum Blasen von Luft gegen die Oberfläche des zu trocknenden Fahrzeuges.

Es ist beispielsweise aus der DE 20 17 089 bekannt, als Zugmittel zum Fördern des zu waschenden Fahrzeugs in einer Autowaschanlage vom Durchfahr-Typ zwei parallel laufende Ketten einzusetzen, zwischen denen in Abständen eine quer gerichtete Schlepprolle angeordnet ist, welche das Rad des zu waschenden Fahrzeugs hintergreift und in Fahrtrichtung fördert. In der DE 20 17 089 übernehmen die seitliche Führung des Rades zwei starr angeordnete Schienen. Durch diese Seitenführungen soll das zwischen diesen auf der Fahrbahn abrollende und von der Schlepprolle geschobene Rad in der Spur gehalten werden.

An diesem Ansatz hat sich jedoch die Tatsache als nachteilig herausgestellt, dass für den Fall, dass das Fahrzeug eingelenkt wird oder stark an der Seitenführung streift, so viel Reibung entsteht, dass das Rad über die Seitenführung rollt und damit das Fahrzeug aus der Spur fährt. Dies kann zu erheblichen Beschädigungen am Fahrzeug und/oder der Waschanlage, insbesondere dem nachgeschalteten Trocknungsabschnitt führen.

Die DE 37 32 542 schlägt als Lösung des obengenannten Problems vor, dass die Autowaschanlage keine die Förderketten übergreifenden, stationären Seitenführungen für das Fahrzeug aufweist und dass die Führungsschienen derart angeordnet und ausgebildet sind, dass ein direkter Kontakt des Fahrzeugrades mit den Förderketten möglich ist und die Förderketten selbst die Seitenführungen für das Fahrzeugrad bilden.

An diesem Ansatz hat sich jedoch die Tatsache als nachteilig herausgestellt, dass aufgrund der Eigenschaft der Förderkette als Radbegrenzung ein direkter Kontakt zwischen Autorad und insbesondere Fahrzeugfelge und einem Kettenglied der Förderkette zustande kommt. Dies führt nicht selten zu unerwünschten Beschädigungen des Fahrzeugrades, insbesondere der Fahrzeugfelge, während des Fördervorgangs aufgrund der harten Materialeigenschaften der Kettenglieder.

Dokument DE-U-20314114 offenbart eine Felgenschutzeinrichtung und eine Vorrichtung zum Fördern gemäß den ersten Teilen der Ansprüche 1 und 12.

Somit liegt der vorliegenden Erfindung die Aufgabe zugrunde, die oben genannten Nachteile zu beseitigen und insbesondere eine Vorrichtung zu schaffen, welche einen sicheren und schadlosen Transport des Fahrzeuges durch die Autowaschanlage hindurch gewährleistet.

Diese Aufgabe wird erfindungsgemäß durch die Felgenschutzvorrichtung mit den Merkmalen des Patentanspruchs 1 sowie Durch die Vorrichtung mit den Merkmalen des Patentanspruchs 12 gelöst.

Die der vorliegenden Erfindung zugrunde liegende Idee besteht darin, eine Felgenschutzvorrichtung zum Schutze einer Kraftfahrzeugfelge während eines Fördervorgangs eines Kraftfahrzeuges in einer mindestens eine Förderkette aufweisenden Fahrzeugbehandlungsanlage zu schaffen, wobei die Felgenschutzvorrichtung derart an die Form eines zugeordneten Kettengliedes der mindestens einen Förderkette angepasst ist, dass die Felgenschutzvorrichtung auf das zugeordnete Kettenglied in zumindest die mit der Kraftfahrzeugfelge in Berührung gelangbaren Oberflächenbereiche des zugeordneten Kettengliedes abdeckender Weise aufklipsbar ist.

Dadurch können die einzelnen Kettenglieder der Förderkette durch die vorgeschlagenen Felgenschutzvorrichtungen auf einfache und kostengünstige Weise derart abgedeckt werden, dass die Fahrzeugräder und insbesondere die kratzerempfindlichen Fahrzeugfelgen nicht weiterhin mit den Kratzern verursachenden Kettengliedern der Förderkette in Berührung gelangen, sondern mit den den Fahrzeugreifen und insbesondere die Fahrzeugfelge schonenden Felgenschutzvorrichtungen.

Durch die aufklipsbare Ausgestaltung können die Felgenschutzvorrichtungen ferner auf einfache Weise auf die jeweiligen Kettenglieder der Förderkette aufgeklipst werden, so dass auch eine Nachmontage auf bereits bestehende Förderketten in vorteilhafter Weise gewährleistet ist. Des Weiteren können etwaige beschädigte Felgenschutzvorrichtungen auf einfache und kostengünstige Weise ausgetauscht werden.

In den Unteransprüchen finden sich vorteilhafte Ausgestaltungen und Verbesserungen der im Patentanspruch 1 angegebenen Felgenschutzvorrichtung bzw. der im Patentanspruch 16 angegebenen Vorrichtung zum Fördern eines Kraftfahrzeuges in einer Fahrzeugbehandlungsanlage.

Gemäß einer bevorzugten Weiterbildung weist die Felgenschutzvorrichtung einen im Wesentlichen flächigen Mittelsteg und zwei daran angeformte, im Wesentlichen flächige Seitenschenkel auf, wobei der Mittelsteg und die Seitenschenkel einen im Querschnitt in etwa U-förmigen Aufnahmebereich zur Aufnahme eines zugeordneten Kettengliedes der mindestens einen Förderkette bilden. Somit sind gerade die mit dem Fahrzeugrad in Berührung gelangenden Oberflächenbereiche des Kettengliedes durch die Felgenschutzvorrichtung vorteilhaft abgedeckt.

Gemäß einer weiteren bevorzugten Weiterbildung steht jeder Seitenschenkel in etwa um einen Winkel von 90° oder um einen etwas von 90° abweichenden Winkel, beispielsweise um einen Winkel zwischen 80° und 90°, zum Aufnahmebereich der Felgenschutzvorrichtung hin geneigt von dem Mittelsteg vor. Dadurch wird eine vorbestimmte Spannkraft geschaffen, welche einen einfachen Aufklipsvorgang und einen sicheren Sitz der Felgenschutzvorrichtung auf dem zugeordneten Kettenglied gewährleistet. Für eine Unterstützung des Aufklipsvorgangs sind zudem die Seitenschenkel vorzugsweise leicht biegsam und in Richtung des Aufnahmebereiches hin federvorgespannt ausgebildet.

Nach einem weiteren bevorzugten Ausführungsbeispiel weist der Mittelsteg an den Stirnseiten in Richtung des Aufnahmebereiches hin abfallend abgeschrägte Kanten als Verlierschutz bzw. Abrollhilfe auf. Dadurch kann auf einfache Weise verhindert werden, dass die Felgenschutzvorrichtungen bei einem Abrollvorgang über Rollen beispielsweise am Untertrum der Fördervorrichtung von dem Kettenglied in nicht gewünschter Weise abgezogen werden. Durch die abgeschrägten Kanten folgt vielmehr ein vorteilhaftes Aufdrücken der Felgenschutzvorrichtung auf das zugeordnete Kettenglied beim Abrollvorgang.

Gemäß einem weiteren bevorzugten Ausführungsbeispiel weist jeder Seitenschenkel eine im Randbereich längs verlaufende, an der dem Aufnahmebereich zugewandten Innenseite vorgesehene und in Richtung der Vorrichtungsaußenseite hin abfallend abgeschrägte Kante als Gleitrampe während des Aufklipsvorgangs auf. Somit können die entsprechenden Bereiche des zugeordneten Kettengliedes an dieser abgeschrägten Kante als Gleitrampe während des Aufklipsvorgangs entlang gleiten, wodurch der Aufklipsvorgang derart unterstützt wird, dass ein händisches und somit einfaches Aufklipsen gewährleistet ist.

Nach einem weiteren bevorzugten Ausführungsbeispiel weist jeder Seitenschenkel in Längsrichtung beidseitig jeweils einen über den Stirnseiten des Mittelsteges vorkragenden Abschnitt auf. Dieser Abschnitt ist an die Form der jeweiligen Kettenglieder in einen in etwa bündigen Abschluss bildender Weise angepasst und deckt insbesondere die die Kettenbolzen aufnehmenden Bereiche der Kettenglieder ab.

Vorzugsweise weist jeder Seitenschenkel im Bereich jedes vorkragenden Abschnitts eine Öffnung zur Aufnahme eines zugeordneten Bolzenkopfes des zugeordneten Kettengliedes auf. Dabei ist jede Öffnung vorteilhaft an die Form des zugeordneten Bolzenkopfes derart angepasst, dass jeweils eine in etwa passgenaue Aufnahme des zugeordneten Bolzenkopfes erfolgt. Dies gewährleistet einen stabilen Eingriff der einzelnen Bolzenköpfe in die jeweils zugeordneten Öffnungen, so dass ein fester und verliersicherer Sitz der Felgenschutzvorrichtung auf dem jeweils zugeordneten Kettenglied gewährleistet ist. Die Öffnungen zusammen mit den jeweils zugeordneten korrespondierenden Bolzenköpfen und den federvorgespannten Seitenschenkel bilden im Wesentlichen die eigentliche Rasteinrichtung.

Gemäß einem weiter bevorzugten Ausführungsbeispiel weist jede Öffnung nach außen abgeschrägte Umfangsränder für eine Unterstützung des Einrast- bzw. Ausrastvorgangs sowie zum Toleranzausgleich auf. Diese abgeschrägten Umfangsränder jeder Öffnung dienen mit anderen Worten ebenfalls als Gleitrampen bei einem Einrast- bzw. Ausrastvorgang für den jeweils aufzunehmenden Bolzenkopf, so dass ein Aufklips- bzw. Abklipsvorgang entsprechend unterstützt wird.

Gemäß einer weiteren bevorzugten Ausgestaltung ist die Felgenschutzvorrichtung einteilig ausgebildet, wobei die Felgenschutzvorrichtung vorzugsweise aus einem geeigneten Kunststoff, beispielsweise Polyamid, hergestellt ist.

Gemäß einem weiteren bevorzugten Ausführungsbeispiel ist jeweils eine Felgenschutzvorrichtung auf jedem zweiten Kettenglied der Förderkette vorgesehen. Vorzugsweise werden die Kettenglieder einer Förderkette mit den erfindungsgemäßen Felgenschutzvorrichtungen versehen, welche die in Querrichtung gesehen größeren Abmessungen aufweisen und im Folgenden als außenliegende Kettenglieder bezeichnet werden, da diese eine höhere Wahrscheinlichkeit für einen Kontakt mit den zu schützenden Fahrzeugfelgen besitzen. Es ist allerdings auch möglich, die erfindungsgemäßen Felgenschutzvorrichtungen auf den jeweils geringere Querabmessungen aufweisenden Kettengliedern, welche im Folgenden als innenliegende Kettenglieder bezeichnet werden, oder die Felgenschutzvorrichtungen auf beliebige Kettenglieder, jeweils in einem geeigneten Abstand voneinander, vorzusehen.

Gemäß einer weiteren bevorzugten Ausgestaltung ist die Felgenschutzvorrichtung derart ausgestaltet, dass sie in etwa einen bündigen Abschluss mit dem zugeordneten Kettenglied bilden. Dadurch wird gewährleistet, dass kein Bereich des abzudeckenden Kettengliedes freiliegt und eine Beschädigung der Fahrzeugfelge verursachen kann. Ferner werden die Kettenglieder in ihrem Fördervorgang nicht behindert.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine Draufsicht auf eine eine Doppelstrangkette aufweisende Fördereinrichtung, wobei einzelne Ket- tenglieder der Förderketten Felgenschutzvorrichtun- gen gemäß einem bevorzugten Ausführungsbeispiel der vorliegenden Erfindung aufweisen;
- Fig. 2: eine Seitenansicht der Fördereinrichtung aus Fig. 1;
- Fig. 3: eine Perspektivansicht eines Ausschnitts einer För- derkette mit Felgenschutzvorrichtungen gemäß einem bevorzugten Ausführungsbeispiel der vorliegenden Erfindung;
- Fig. 4: eine Seitenansicht einer Felgenschutzvorrichtung gemäß einem bevorzugten Ausführungsbeispiel der vorliegenden Erfindung;
- Fig. 5: Querschnittsdarstellungen der Felgenschutzvorrich- tung aus Fig. 4 entlang den Schnittlinien A-A und B-B;
- Fig. 6: eine Querschnittsdarstellung der Felgenschutzvor- richtung aus Fig. 3 entlang der Schnittlinie C-C;
- Fig. 7: eine perspektivische Ansicht der Felgenschutzvor- richtung aus Fig. 3;
- Fig. 8: eine Unteransicht einer Felgenschutzvorrichtung ge- mäß einem weiteren bevorzugten Ausführungsbeispiel der vorliegenden Erfindung;
- Fig. 9: eine perspektivische Unteransicht der Felgenschutz- vorrichtung aus Fig. 8;
- Fig. 10: eine Perspektivansicht eines Ausschnitts einer För- derkette mit Felgenschutzvorrichtungen gemäß einem weiteren bevorzugten Ausführungsbeispiel der vor- liegenden Erfindung; und
- Fig. 11: eine perspektivische Unteransicht eines Ausschnitts der Förderkette mit Felgenschutzvorrichtung nach Fig 10.

In den Figuren der Zeichnung bezeichnen gleiche Bezugszeichen gleiche oder funktionsgleiche Komponenten, soweit nichts Gegenteiliges angegeben ist.

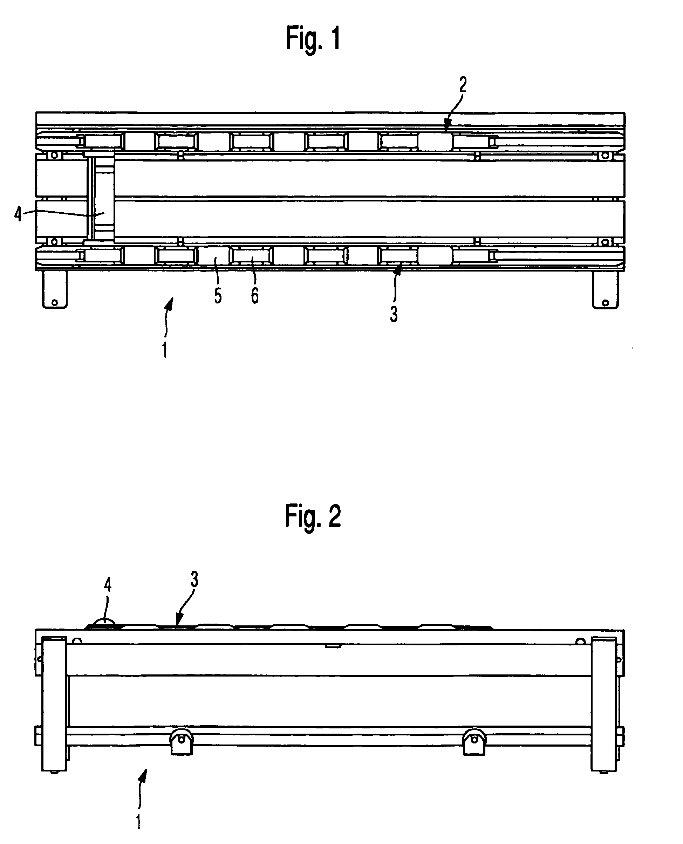

Figuren 1 und 2 illustrieren eine Fördereinrichtung 1 einer Autowaschanlage vom Durchfahr-Typ in einer Draufsicht bzw. Seitenansicht. Die Fördereinrichtung 1 weist beispielhaft eine Doppelstrangkette bestehend aus den beiden einzelnen Förderketten 2 und 3 auf, welche in den Fig. 1 und 2 der Übersichtlichkeit halber lediglich ausschnittsweise dargestellt sind. Die parallel laufenden Förderketten 2 und 3 bilden das Zugmittel zum Befördern des Fahrzeugs durch die Waschanlage, wobei zwischen den beiden Förderketten 2, 3 in vorbestimmten Abständen Schlepprollen 4 angeordnet sind, welche das Fahrzeugrad des zu waschenden Fahrzeugs hintergreifen und in Förderrichtung vorwärts schieben. Die Förderketten 2, 3 sind im Allgemeinen als endlose Ketten ausgebildet und laufen, wie in den Fig. 1 und 2 dargestellt, auf dem Obertrum in entsprechenden Führungen sowie in dem Untertrum der Fördereinrichtung 1 (nicht dargestellt). Hierbei werden die Förderketten 2, 3 im Allgemeinen auf Führungsrollen im Untertrum der Fördereinrichtung 1 geführt.

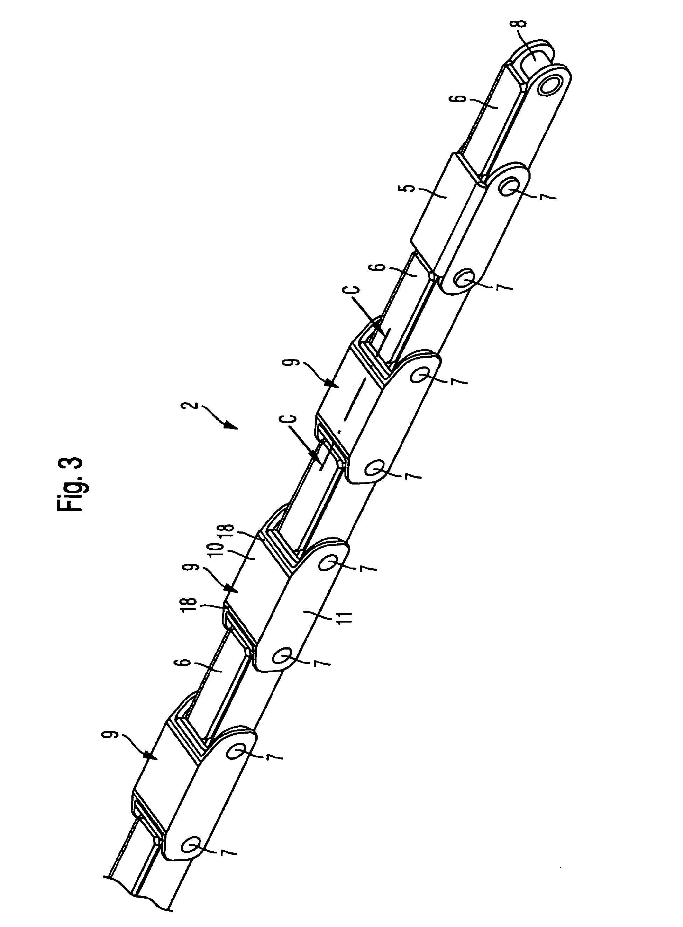

Fig. 3 zeigt einen Ausschnitt einer beispielhaften Förderkette 2 in Perspektivdarstellung. Wie in Fig. 3 ersichtlich ist, besteht die beispielhafte Förderkette 2 aus mehreren Kettengliedern, wobei zwei verschiedene Arten von Kettengliedern vorgesehen sind, nämlich ein außenliegendes Kettenglied 5 sowie ein innenliegendes Kettenglied 6. Die außenliegenden Kettenglieder 5 und die innenliegenden Kettenglieder 6 wechseln sich in alternierender Reihenfolge ab, wie in Fig. 3 illustriert ist.

Beispielsweise weist jedes innenliegende Kettenglied 6 in den Seitenbereichen jeweils eine Buchse 8 zur Aufnahme eines zugeordneten Kettenbolzens auf, welcher durch ein korrespondierendes Loch in den Seitenbereichen des jeweils zugeordneten außenliegenden Kettengliedes 5 derart hindurchgeführt wird, dass der Bolzenkopf 7 des Kettenbolzens von der Außenfläche des außenliegenden Kettengliedes 5 im zusammengebauten Zustand zur Außenseite hin vorsteht. Die einzelnen Kettenglieder 5, 6 sind über die Kettenbolzen gelenkig miteinander verbunden. Dadurch wird eine Umlenkung in den Stirnbereichen der Fördereinrichtung und ein Endlosbetrieb der Förderketten gewährleistet.

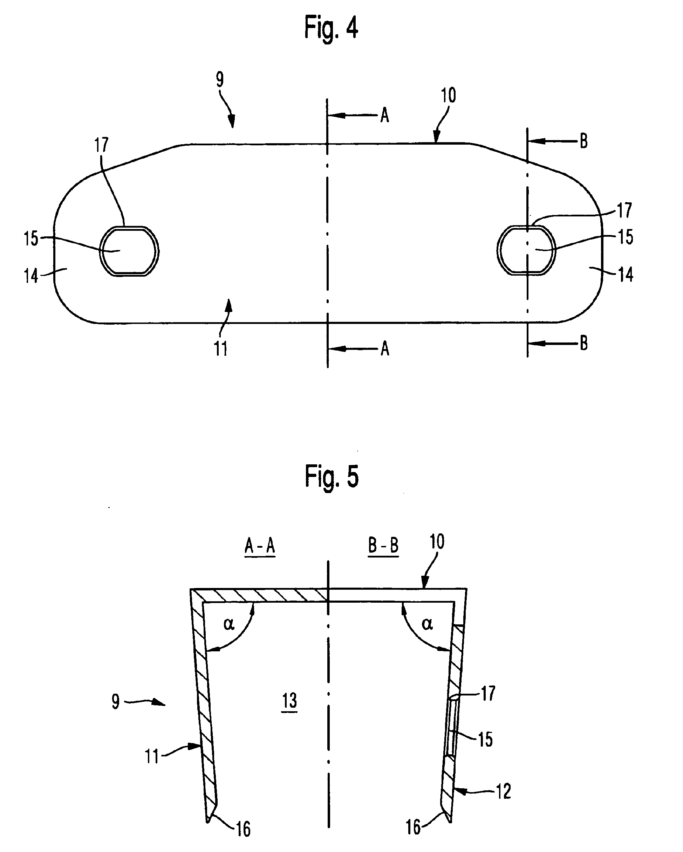

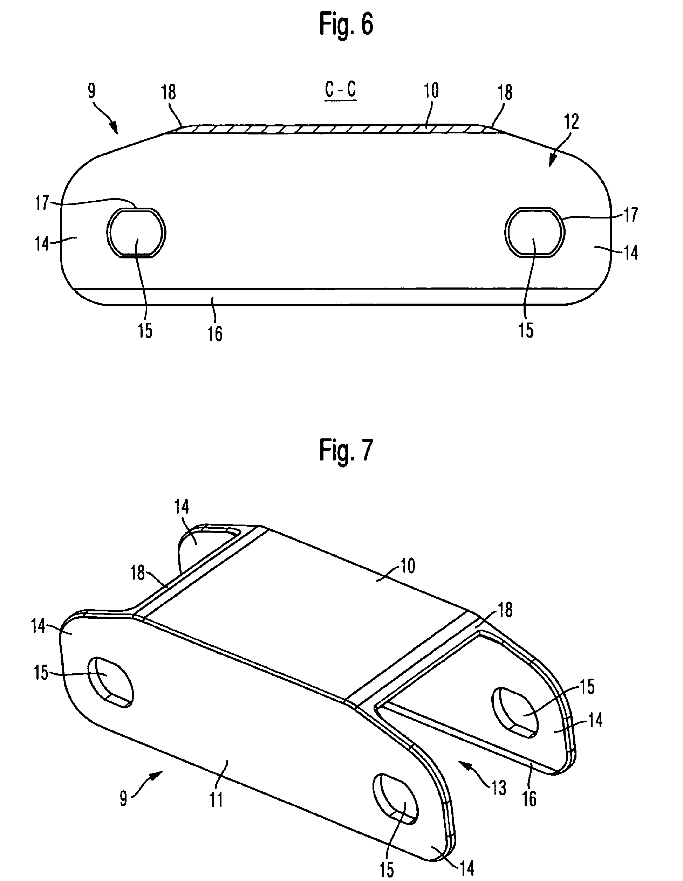

Des Weiteren sind in Fig. 3 schematisch drei Felgenschutzvorrichtungen 9 gemäß einem bevorzugten Ausführungsbeispiel der vorliegenden Erfindung dargestellt, welche jeweils auf einem zugeordneten, außenliegenden Kettenglied 5 aufgeklipst sind. Die Felgenschutzvorrichtungen gemäß diesem bevorzugten Ausführungsbeispiel der vorliegenden Erfindung werden im Folgenden unter Bezugnahme auf die Fig. 3 bis 7 näher erläutert. Dabei illustrieren Fig. 4 eine Seitenansicht, Fig. 5 zwei Querschnittsansichten entlang den Schnittlinien A-A und B-B aus Fig. 4 und Fig. 6 eine Querschnittsansicht entlang der Schnittlinie C-C aus Fig. 3 der Felgenschutzvorrichtung 9.

Die Felgenschutzvorrichtung 9 gemäß dem in den Figuren dargestellten Ausführungsbeispiel ist beispielsweise einteilig ausgebildet und aus einem die Felge schonenden Kunststoff, insbesondere einem Polyamid-Kunststoff, hergestellt. Es ist für einen Fachmann offensichtlich, dass auch andere geeignete Materialien gewählt werden können, solange diese Materialien einen Verkratzschutz für die Fahrzeugfelgen gewährleisten.

Die Felgenschutzvorrichtung 9 besteht gemäß dem vorliegenden Ausführungsbeispiel aus einem ebenen, flächigen Mittelsteg 10, welcher beispielsweise eine Wandstärke zwischen in etwa 3 bis 4 mm aufweist und auf der der Außenseite hin zugewandten Oberfläche einen Schriftzug des Herstellers tragen kann.

Des Weiteren umfasst die Felgenschutzvorrichtung 9 zwei symmetrisch zueinander ausgebildete und vom Mittelsteg abgewinkelte Seitenschenkel 11, 12, welche ebenfalls als ebene, flächige Schenkel mit beispielsweise einer Wandstärke von in etwa 3 bis 4 mm ausgebildet sind.

Die Seitenschenkel 11, 12 sind als seitliche, leicht biegsame Begrenzungswände der Felgenschutzvorrichtung 9 vorgesehen, sind in etwa um 90° von dem Mittelsteg 10 abgewinkelt und bilden somit zusammen mit dem Mittelsteg 10 einen Aufnahmebereich 13 zur Aufnahme eines zugeordneten Kettengliedes 5 bzw. 6. Gemäß dem vorliegenden Ausführungsbeispiel sind die beiden Seitenschenkel 11, 12 unter einem Winkel α zu dem Mittelsteg 10 geneigt, wobei α etwas kleiner als 90°, beispielsweise zwischen 80° und 90°, beträgt, wie in Fig. 5 beispielhaft illustriert.

Die beiden Seitenschenkel 11, 12 ragen in Längsrichtung gesehen an beiden Stirnseiten über dem Mittelsteg 10 hervor, wobei die vorkragenden Abschnitte 14 jeweils eine Öffnung 15 zur Aufnahme eines zugeordneten Bolzenkopfes 7 aufweisen.

Die Felgenschutzvorrichtung 9 ist zudem derart ausgestaltet, dass sie auf das zugeordnete Kettenglied 5 bzw. 6 in einfacher Weise derart aufgeklipst werden kann, dass die mit einer Fahrzeugfelge in Berührung gelangenden Flächen des entsprechenden Kettengliedes 5 bzw. 6 vollständig abgedeckt sind. Es erfolgt eine Verrastung der Felgenschutzvorrichtung 9 mit dem zugeordneten Kettenglied 5 bzw. 6 mittels Klemmwirkung derart, dass die beiden in Richtung des Aufnahmebereiches 13 federvorgespannten Seitenschenkel 11 und 12 beim Aufsteckvorgang entlang den Seitenbereichen des zugeordneten Kettengliedes 5 bzw. 6 gleiten und über die vorstehenden Bolzenköpfe solange geschoben werden, bis diese in die zugeordneten, korrespondierenden Öffnungen 15 der vorkragenden Abschnitte 14 einrasten.

Als Gleithilfen bzw. Ein- oder Ausrasthilfen weist die Felgenschutzvorrichtung 9 mehrere abgeschrägte Kanten auf, welche den Aufsteckvorgang bzw. im Falle einer Demontage der Felgenschutzvorrichtung den Abziehvorgang unterstützen.

Beispielsweise weist jeder Seitenschenkel 11, 12 an der freien Längskante innenseitig eine in Richtung der Außenseite hin abgeschrägte Kante 16 auf, welche beim Aufsteck- bzw. Abziehvorgang als Gleitrampe für die vorstehenden Bolzenköpfe 7 vorgesehen ist. Die entlang dieser abgeschrägten Kante 16 geführten Bolzenköpfe 7 biegen beim Aufsteckvorgang die Seitenschenkel 11, 12 in Richtung zur Außenseite hin entgegen der Vorspannung, sodass aufgrund der Federvorspannung die Seitenschenkel 11, 12 bei einem Einrasten der Bolzenköpfe 7 in die zugeordneten Öffnungen 15 in Richtung zum zugeordneten Kettenglied 5 bzw. 6 hin zurück verfahren und die Klemmwirkung bzw. die Verrastung mit den Bolzenköpfen 7 bewirken.

Des Weiteren weist zur Unterstützung des Aufsteck- bzw. Abziehvorgangs jede Öffnung 15 an einer oder beiden Außenseiten abgeschrägte Umfangsränder 17 auf, welche vorzugsweise ebenfalls jeweils in Richtung nach außen hin abfallend abgeschrägt sind. Zusätzlich dienen diese abgeschrägten Umfangsränder 17 einem Toleranzausgleich für eine stabile und sichere Einrastung der Felgenschutzvorrichtung 9 mit den zugeordneten Bolzenköpfen 7 bzw. den zugeordneten Kettengliedern 5 bzw. 6.

Gemäß dem vorliegenden Ausführungsbeispiel weist zudem auch der Mittelsteg 10 an beiden Stirnseiten eine in Richtung des Aufnahmebereiches abfallend abgeschrägte Kante 18 auf, wie in Fig. 6 schematisch angedeutet ist. Diese abgeschrägten Kanten 18 des Mittelsteges 10 dienen insbesondere einem verbesserten Andruck der Felgenschutzvorrichtung 9 auf die zugeordneten Kettenglieder 5 bzw. 6 während eines Abrollens auf zugeordneten Rollen der Fördereinrichtung 1, beispielsweise auf Rollen im Untertrum der Fördereinrichtung 1. Bei Nichtvorhandensein derartiger abgeschrägter Kanten 18 könnten die Rollen der Fördereinrichtung 1 unter Umständen ein Abziehen der Felgenschutzvorrichtung 9 von dem zugeordneten Kettenglied 5 bzw. 6 in ungewünschter Weise verursachen.

Vorzugsweise ist die Felgenschutzvorrichtung 9 sowohl in Längsrichtung als auch in Querrichtung spiegelsymmetrisch ausgebildet, so dass im Falle eines Verschleißes die Felgenschutzvorrichtung 9 auf einfache Weise um 180° gedreht auf dem zugeordneten Kettenglied 5 bzw. 6 aufgebracht werden kann, wodurch die bisher noch nicht verschlissene Seite dem Fahrzeugrad zugewandt wird.

Ferner ist die Felgenschutzvorrichtung 9 vorzugsweise derart geformt, dass sie einen in etwa bündigen Abschluss mit dem zugeordneten Kettenglied 5 bzw. 6 oder zumindest mit den mit der Felge in Kontakt gelangenden Oberflächenbereiche des zugeordneten Kettenglieds 5 bzw. 6 für einen optimalen Felgenschutz bildet.

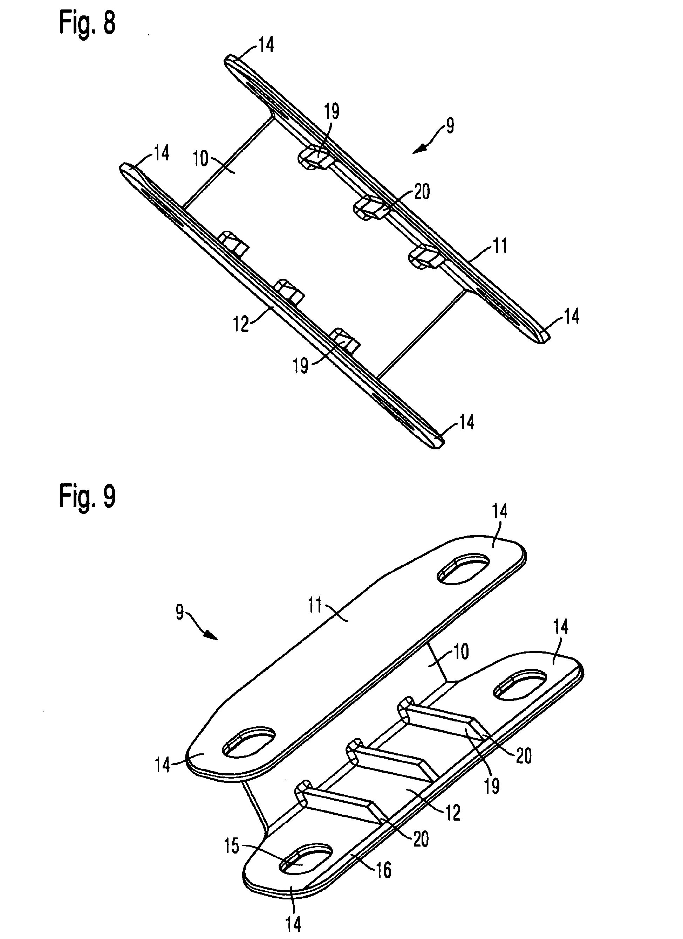

Im Folgenden wird unter Bezugnahme auf die Fig. 8 bis 11 eine Felgenschutzvorrichtung 9 gemäß einem weiteren bevorzugten Ausführungsbeispiel der vorliegenden Erfindung näher erläutert. Wie in den Fig. 8 bis 11 ersichtlich ist, weist die Felgenschutzvorrichtung 9 gemäß diesem Ausführungsbeispiel zusätzlich zu dem oben beschriebenen Ausführungsbeispiel mehrere Verstärkungsrippen 19 auf. Die Verstärkungsrippen 19 sind auf den Seitenschenkeln 11, 12 angeformt und erstrecken sich von der abgeschrägten Kante 16 jedes Seitenschenkels hin zum Mittelsteg 10 unter Bildung eines senkrechten Stoßes.

Gemäß dem vorliegenden Ausführungsbeispiel sind an jedem Seitenschenkel 11, 12 jeweils drei gleichmäßig voneinander beabstandete Verstärkungsrippen 19 im Bereich zwischen den Öffnung 15 jedes Schenkels 11, 12 vorgesehen. Die Verstärkungsrippen 19 stützen sich dabei jeweils an dem Mittelsteg 10 an dem einen Ende ab und weisen an dem gegenüberliegenden, freien Ende ebenfalls eine abgeschrägte Kante 20 auf. Diese abgeschrägten Kanten 20 dienen ebenfalls als Gleitrampe beim Aufsteckvorgang der Felgenschutzvorrichtung 9 auf ein zugeordnetes Kettenglied 5 bzw. 6. Wie in Fig. 9 insbesondere illustriert ist, schließt sich die abgeschrägte Kante 20 der Verstärkungsrippen 19 vorteilhaft unmittelbar an die abgeschrägte Kante 16 des entsprechenden Seitenschenkels 11, 12 an. Dadurch wird eine durchgehende Gleitbewegung beim Aufsteckvorgang gewährleistet.

Die vorgesehenen Verstärkungsrippen 19 sind derart vorteilhaft, dass sie die Klemmwirkung bzw. die Aufsteckspannung vergrößern. Die Verstärkungsrippen 19 dienen ferner einer Gesamtverstärkung bzw. -versteifung der Felgenschutzvorrichtung 9.

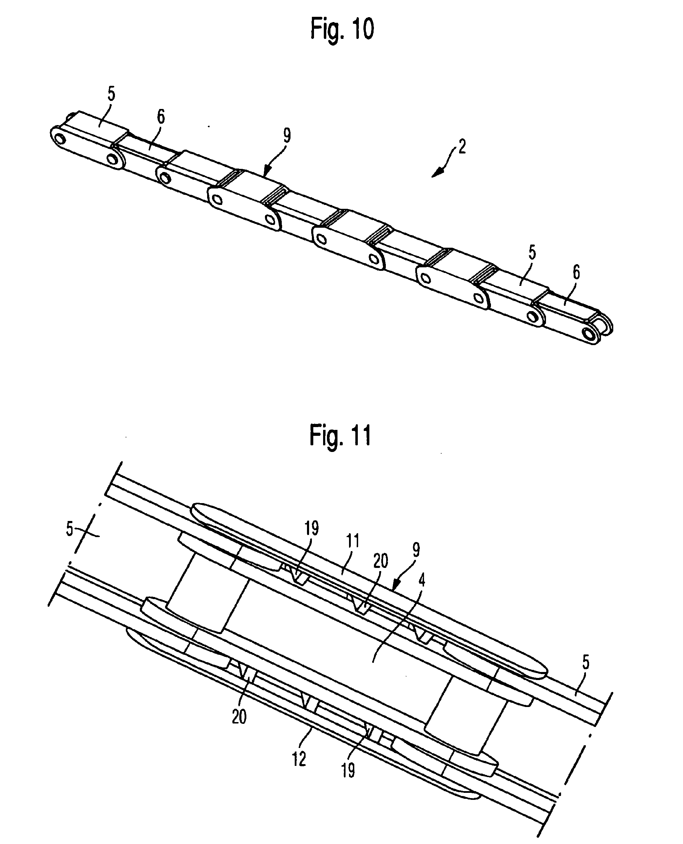

Wie in den Fig. 10 und 11 dargestellt ist, kann die Felgenschutzvorrichtung 9, im Prinzip gemäß beiden obigen Ausführungsbeispielen, auch auf den innenliegenden Kettengliedern 6 aufgeklipst werden.

Es ist für einen Fachmann offensichtlich, dass die Ausgestaltung, Anordnung sowie Anzahl der einzelnen Verstärkungsrippen 19 von denjenigen gemäß dem in den Figuren dargestellten Ausführungsbeispiel abweichen kann, ohne den Schutzbereich der vorliegenden Erfindung zu verlassen.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Beispielsweise können die Seitenschenkel der Felgenschutzvorrichtung auch um einen anderen Winkel α als die angegebenen zu dem Mittelsteg geneigt sein. Es kann sich auch als vorteilhaft erweisen, dass die Seitenschenkel genau um 90° von dem Mittelsteg vorkragen. Hierbei ist allerdings zu eruieren, wann eine optimale Klemmwirkung bei einfachem Herstellungsprozess bewerkstelligt werden kann.

Des Weiteren können die einzelnen Abschrägungen der Form und/oder der Positionierung nach ebenfalls entsprechend dahingehend modifiziert werden, dass eine optimale Klemmwirkung bei einfacher Handhabung bewerkstelligt wird.

Im Bereich der Schlepprolle 4 kann es unter Umständen erforderlich sein, eine von den übrigen Felgenschutzvorrichtungen abweichende Ausgestaltung der Felgenschutzvorrichtung zu wählen, so dass auch in diesem Bereich ein Aufklipsvorgang bewerkstelligt werden kann und dieser Bereich ebenfalls einen Felgenschutz bietet.

### Bezugszeichenliste

- 1: Fördereinrichtung
- 2: Förderkette
- 3: Förderkette
- 4: Schlepprolle
- 5: außen liegendes Kettenglied
- 6: innen liegendes Kettenglied
- 7: Bolzenkopf
- 8: Buchse
- 9: Felgenschutzvorrichtung
- 10: Mittelsteg
- 11: Seitenschenkel
- 12: Seitenschenkel
- 13: Aufnahmebereich
- 14: vorkragender Abschnitt
- 15: Öffnung
- 16: abgeschrägte Kante des Seitenschenkels
- 17: abgeschrägte Umfangsränder der Öffnungen
- 18: abgeschrägte Kante des Mittelsteges
- 19: Verstärkungsrippen
- 20: abgeschrägte Kante der Verstärkungsrippen
- α: Winkel zwischen Mittelsteg und Seitenschenkel

## Patentansprüche

1. Felgenschutzvorrichtung (9) zum Schutze einer Kraftfahrzeugfelge während eines Fördervorgangs eines Kraftfahrzeuges in einer mindestens eine Förderkette (2; 3) aufweisenden Fahrzeugbehandlungsanlage, wobei die Felgenschutzvorrichtung (9) derart an die Form eines zugeordneten Kettengliedes (5; 6) der mindestens einen Förderkette (2; 3) angepasst ist, dass die Felgenschutzvorrichtung (9) auf das zugeordnete Kettenglied (5; 6) in zumindest die mit der Kraftfahrzeugfelge in Berührung gelangbaren Oberflächenbereiche des zugeordneten Kettengliedes (5; 6) abdeckender Weise aufklipsbar ist, **dadurch gekennzeichnet, dass** die Felgenschutzvorrichtung (9) einen im Wesentlichen flächigen Mittelsteg (10) und zwei daran angeformte, im Wesentlichen flächige Seitenschenkel (11, 12) aufweist, wobei der Mittelsteg (10) und die Seitenschenkel (11, 12) einen im Querschnitt in etwa U-förmigen Aufnahmebereich (13) zur Aufnahme eines zugeordneten Kettengliedes (5; 6) der mindestens einen Förderkette (2; 3) bilden, wobei die Seitenschenkel (11; 12) leicht biegsam und in Richtung des Aufnahmebereiches (13) hin federvorgespannt ausgebildet sind, wobei jeder Seitenschenkel (11; 12) im Bereich jedes vorkragenden Abschnitts (14) eine Öffnung (15) zur Aufnahme eines zugeordneten Bolzenkopfes (7) des zugeordneten Kettengliedes (5; 6) aufweist und wobei jede Öffnung (15) an die Form des zugeordneten Bolzenkopfes (7) derart angepasst ist, dass jeweils eine in etwa passgenaue Aufnahme des zugeordneten Bolzenkopfes (7) erfolgt.

2. Felgenschutzvorrichtung nach Anspruch 1, **dadurch gekennzeichnet, dass** jeder Seitenschenkel (11; 12) in etwa um einen Winkel (α) von 90° oder um einen etwas von 90° abweichenden Winkel (α), beispielsweise um einen Winkel (α) zwischen 80° und 90°, zum Aufnahmebereich (13) der Felgenschutzvorrichtung (9) hin geneigt von dem Mittelsteg (10) vorsteht.

3. Felgenschutzvorrichtung nach Anspruch 1 oder 2, **dadurch gekennzeichnet, dass** der Mittelsteg (10) zumindest an einer Stirnseite eine in Richtung des Aufnahmebereiches (13) hin abfallend abgeschrägte Kante (18) als Verlierschutz bzw. Abrollhilfe aufweist.

4. Felgenschutzvorrichtung nach wenigstens einem der Ansprüche 2 bis 35, **dadurch gekennzeichnet, dass** jeder Seitenschenkel (11; 12) eine im Randbereich längs verlaufende, innenseitige und in Richtung der Außenseite hin abfallend abgeschrägte Kante (16) als Gleitrampe während des Aufsteck- bzw. Abziehvorgangs aufweist.

5. Felgenschutzvorrichtung nach wenigstens einem der Ansprüche 2 bis 4, **dadurch gekennzeichnet, dass** jeder Seitenschenkel (11; 12) in Längsrichtung beidseitig jeweils einen über den Stirnseiten des Mittelsteges (10) vorkragenden Abschnitt (14) aufweist.

6. Felgenschutzvorrichtung nach wenigstens einem der vorhergehenden Ansprüche, **dadurch gekennzeichnet, dass** jede Öffnung (15) an den Außenrändern abfallend abgeschrägte Umfangsränder (17) für eine Unterstützung des Aufsteck- bzw. Abziehvorgangs sowie zum Toleranzausgleich aufweist.

7. Felgenschutzvorrichtung nach wenigstens einem der vorhergehenden Ansprüche, **dadurch gekennzeichnet, dass** die Felgenschutzvorrichtung (9) einteilig ausgebildet ist.

8. Felgenschutzvorrichtung nach wenigstens einem der vorhergehenden Ansprüche, **dadurch gekennzeichnet, dass** die Felgenschutzvorrichtung (9) aus einem geeigneten Kunststoff, beispielsweise Polyamid (PA), hergestellt ist.

9. Felgenschutzvorrichtung nach wenigstens einem der vorhergehenden Ansprüche, **dadurch gekennzeichnet, dass** die Felgenschutzvorrichtung (9) in Längsrichtung und/oder Querrichtung gesehen spiegelsymmetrisch ausgebildet ist.

10. Felgenschutzvorrichtung nach wenigstens einem der vorhergehenden Ansprüche, **dadurch gekennzeichnet, dass** die Felgenschutzvorrichtung (9) mehrere Verstärkungsrippen (19) aufweist, welche an den Innenwänden der Seitenschenkel (11, 12) vorgesehen sind.

11. Felgenschutzvorrichtung nach Anspruch 10, **dadurch gekennzeichnet, dass** an jedem Seitenschenkel (11, 12) jeweils mehrere, beispielsweise drei, parallel zueinander und gleichmäßig voneinander beabstandete Verstärkungsrippen (19) vorgesehen sind, welche sich jeweils von der abgeschrägten Kante (16) jedes Seitenschenkels (11; 12) in Richtung des Mittelsteges (10) erstrecken und unter Bildung eines senkrechten Stoßes an dem Mittelsteg (10) angeformt sind.

12. Vorrichtung zum Fördern eines Kraftfahrzeuges in einer Fahrzeugbehandlungsanlage, mit:
mindestens einer in Längsrichtung der Fahrzeugbehandlungsanlage geführten, endlosen Förderkette (2; 3); und
mindestens einer Felgenschutzvorrichtung (9) zum Schutze einer Kraftfahrzeugfelge während des Fördervorgangs des Kraftfahrzeuges, wobei die Felgenschutzvorrichtung (9) derart an die Form eines zugeordneten Kettengliedes (5; 6) der mindestens einen Förderkette (2; 3) angepasst ist, dass die Felgenschutzvorrichtung (9) auf das zugeordnete Kettenglied (5; 6) in zumindest die mit der Kraftfahrzeugfelge in Berührung gelangbaren Oberflächenbereiche des zugeordneten Kettengliedes (5; 6) abdeckender Weise aufklipsbar ist, **dadurch gekennzeichnet, dass** die Felgenschutzvorrichtung (9) einen im Wesentlichen flächigen Mittelsteg (10) und zwei daran angeformte, im Wesentlichen flächige Seitenschenkel (11, 12) aufweist, wobei der Mittelsteg (10) und die Seitenschenkel (11, 12) einen im Querschnitt in etwa U-förmigen Aufnahmebereich (13) zur Aufnahme eines zugeordneten Kettengliedes (5; 6) der mindestens einen Förderkette (2; 3) bilden, wobei die Seitenschenkel (11; 12) leicht biegsam und in Richtung des Aufnahmebereiches (13) hin federvorgespannt ausgebildet sind, wobei jeder Seitenschenkel (11; 12) im Bereich jedes vorkragenden Abschnitts (14) eine Öffnung (15) zur Aufnahme eines zugeordneten Bolzenkopfes (7) des zugeordneten Kettengliedes (5; 6) aufweist und wobei jede Öffnung (15) an die Form des zugeordneten Bolzenkopfes (7) derart angepasst ist, dass jeweils eine in etwa passgenaue Aufnahme des zugeordneten Bolzenkopfes (7) erfolgt.

13. Vorrichtung nach Anspruch 12, **dadurch gekennzeichnet, dass** eine Felgenschutzvorrichtung (9) nach wenigstens einem der vorhergehenden Ansprüche auf jedem zweiten Kettenglied (5; 6) der Förderkette (2; 3) vorgesehen ist.

14. Vorrichtung nach Anspruch 12 oder 13, **dadurch gekennzeichnet, dass** die Felgenschutzvorrichtung (9) in etwa einen seitlich bündigen Abschluss mit dem zugeordneten Kettenglied bildet.

## Claims

1. Wheel rim protection device (9) for protecting a motor vehicle wheel rim during the procedure of conveying a motor vehicle in a vehicle treatment plant which comprises at least one conveyor chain (2; 3), wherein the wheel rim protection device (9) is adapted to the shape of an allocated chain link (5; 6) of the at least one conveyor chain (2; 3) such that the wheel rim protection device (9) can be clipped onto the allocated chain link (5; 6) in such a manner as to cover at least the surface regions of the allocated chain link (5; 6) which can come into contact with the motor vehicle wheel rim, **characterised in that** the wheel rim protection device (9) comprises a substantially flat central web (10) and two substantially flat lateral limbs (11, 12) integrally formed thereon, wherein the central web (10) and the lateral limbs (11, 12) form a receiving region (13), which is approximately U-shaped in cross-section, for receiving an allocated chain link (5; 6) of the at least one conveyor chain (2; 3), wherein the lateral limbs (11; 12) are formed so as to be easily bendable and so as to be spring-biased in the direction towards the receiving region (13), wherein each lateral limb (11; 12) comprises in the region of each protruding portion (14) an opening (15) for receiving an allocated bolt head (7) of the allocated chain link (5; 6) and wherein each opening (15) is adapted to the shape of the allocated bolt head (7) such that in each case the allocated bolt head (7) is received approximately in a precise fitting manner.

2. Wheel rim protection device as claimed in claim 1, **characterised in that** each lateral limb (11; 12) protrudes from the central web (10) inclined towards the receiving region (13) of the wheel rim protection device (9) approximately by an angle (α) of 90° or by an angle (α) which deviates slightly from 90°, e.g. by an angle (α) between 80° and 90°.

3. Wheel rim protection device as claimed in claim 1 or 2, **characterised in that** the central web (10) comprises at least on an end side an edge (18), which is bevelled so as to slope in the direction towards the receiving region (13), as a loss prevention means or rolling aid.

4. Wheel rim protection device as claimed in at least one of claims 2 to 35 [sic], **characterised in that** each lateral limb (11; 12) comprises an inner-side edge (16) which extends longitudinally in the edge region and is bevelled so as to slope in the direction towards the outer side, as a sliding ramp during the attachment or detachment procedure.

5. Wheel rim protection device as claimed in at least one of claims 2 to 4, **characterised in that** each lateral limb (11; 12) comprises on both sides in the longitudinal direction a respective portion (14) which protrudes over the end sides of the central web (10).

6. Wheel rim protection device as claimed in at least one of the preceding claims, **characterised in that** each opening (15) comprises peripheral edges (17), which are bevelled so as to slope on the outer edges, for assisting the attachment or detachment procedure and for equalisation of tolerances.

7. Wheel rim protection device as claimed in at least one of the preceding claims, **characterised in that** the wheel rim protection device (9) is formed in one piece.

8. Wheel rim protection device as claimed in at least one of the preceding claims, **characterised in that** the wheel rim protection device (9) is produced from a suitable synthetic material, e.g. polyamide (PA).

9. Wheel rim protection device as claimed in at least one of the preceding claims, **characterised in that** the wheel rim protection device (9) is formed in a mirror-symmetrical manner as seen in the longitudinal direction and/or transverse direction.

10. Wheel rim protection device as claimed in at least one of the preceding claims, **characterised in that** the wheel rim protection device (9) comprises several reinforcement ribs (19) which are provided on the inner walls of the lateral limbs (11, 12).

11. Wheel rim protection device as claimed in claim 10, **characterised in that** each lateral limb (11, 12) is provided in each case with several, e.g. three, reinforcement ribs (19) which are disposed in parallel with one another, are uniformly spaced apart from one another and extend in each case from the bevelled edge (16) of each lateral limb (11; 12) in the direction of the central web (10) and are integrally formed on the central web (10) with the formation of a vertical joint.

12. Device for conveying a motor vehicle in a vehicle treatment plant, having:
- at least one endless conveyor chain (2; 3) which is guided in the longitudinal direction of the vehicle treatment plant; and
- at least one wheel rim protection device (9) for protecting a motor vehicle wheel rim during the procedure of conveying the motor vehicle, wherein the wheel rim protection device (9) is adapted to the shape of an allocated chain link (5; 6) of the at least one conveyor chain (2; 3) such that the wheel rim protection device (9) can be clipped onto the allocated chain link (5; 6) in such a manner as to cover at least the surface regions of the allocated chain link (5; 6) which can come into contact with the motor vehicle wheel rim,
**characterised in that** the wheel rim protection device (9) comprises a substantially flat central web (10) and two substantially flat lateral limbs (11, 12) which are integrally formed thereon, wherein the central web (10) and the lateral limbs (11, 12) form a receiving region (13), which is approximately U-shaped in cross-section, for receiving an allocated chain link (5; 6) of the at least one conveyor chain (2; 3), wherein the lateral limbs (11; 12) are formed so as to be easily bendable and so as to be spring-biased in the direction towards the receiving region (13), wherein each lateral limb (11; 12) comprises in the region of each protruding portion (14) an opening (15) for receiving an allocated bolt head (7) of the allocated chain link (5; 6) and wherein each opening (15) is adapted to the shape of the allocated bolt head (7) such that in each case the allocated bolt head (7) is received approximately in a precise fitting manner.

13. Device as claimed in claim 12, **characterised in that** a wheel rim protection device (9) as claimed in at least one of the preceding claims is provided on each second chain link (5; 6) of the conveyor chain (2; 3).

14. Device as claimed in claim 12 or 13, **characterised in that** the wheel rim protection device (9) forms approximately a laterally flush termination with the allocated chain link.

## Revendications

1. Dispositif de protection des jantes (9) destiné à protéger une jante de véhicule automobile pendant un processus de transport d'un véhicule automobile dans une installation de traitement de véhicule présentant au moins une chaîne de transport (2, 3), le dispositif de protection des jantes (9) étant adapté de telle sorte à la forme d'un maillon associé (5, 6) d'au moins une chaîne de transport (2, 3) que le dispositif de protection des jantes (9) est clipsable de manière couvrante sur le maillon associé (5, 6) dans au moins les zones de surface pouvant venir en contact avec la jante de véhicule automobile du maillon associé (5, 6), **caractérisé par le fait que** le dispositif de protection des jantes (9) présente une entretoise médiane (10) essentiellement plate et deux branches latérales (11, 12) formées essentiellement plates sur l'entretoise, l'entretoise médiane (10) et les branches latérales (11, 12) formant une zone de logement à la section en forme de U (13) destinée à loger un maillon associé (5, 6) d'au moins une chaîne de transport (2, 3), la branche latérale (11, 12) étant formée légèrement flexible et précontrainte par ressort dans la direction de la zone de logement (13), chaque branche latérale (11, 12) présentant dans la zone de chaque section en saillie (19) une ouverture (15) destinée à loger une tête de boulon associée (7) du maillon associé (5, 6) et chaque ouverture (15) étant adaptée de telle sorte à la forme de la tête de boulon associée (7) qu'un logement approximativement ajusté de chaque tête de boulon (7) est réalisé.

2. Dispositif de protection des jantes selon la revendication 1, **caractérisé par le fait que** chaque branche latérale (11, 12) fait saillie de l'entretoise médiane (10) inclinée approximativement d'un angle (a) de 90° ou d'un angle légèrement déviant de 90° (a), par exemple d'un angle (a) entre 80° et 90°, par rapport à la zone de logement (13) du dispositif de protection des jantes (9).

3. Dispositif de protection des jantes selon la revendication 1 ou 2, **caractérisé par le fait que** l'entretoise médiane (10) présente au moins au niveau d'une face frontale une arête biseautée de manière inclinée (18) dans la direction de la zone de logement (13) servant de protection contre la perte d'éléments constitutifs ou d'aide au déroulement.

4. Dispositif de protection des jantes selon au moins l'une des revendications 2 à 35, **caractérisé par le fait que** chaque branche latérale (11, 12) présente dans la zone de contour une arête (16) interne agencée longitudinalement et biseautée de manière inclinée dans la direction de la face extérieure servant de face inclinée pendant le processus d'enfichage et de décrochage.

5. Dispositif de protection des jantes selon au moins l'une des revendications 2 à 4, **caractérisé par le fait que** chaque branche latérale (11, 12) présente une section en saillie (14) sur les deux côtés dans la direction longitudinale au-delà des faces frontales de l'entretoise médiane (10).

6. Dispositif de protection des jantes selon au moins l'une des revendications précédentes, **caractérisé par le fait que** chaque ouverture (15) présente au niveau des contours extérieurs des bords périphériques (17) biseautés de manière inclinée pour un soutien du processus d'enfichage et de décrochage ainsi que pour l'équilibrage de tolérance.

7. Dispositif de protection des jantes selon au moins l'une des revendications précédentes, **caractérisé par le fait que** le dispositif de protection des jantes (9) est réalisé en une seule pièce.

8. Dispositif de protection des jantes selon au moins l'une des revendications précédentes, **caractérisé par le fait que** le dispositif de protection des jantes (9) est fabriqué en matière plastique adaptée, par exemple en polyamide (PA).

9. Dispositif de protection des jantes selon au moins l'une des revendications précédentes, **caractérisé par le fait que** le dispositif de protection des jantes (9), vu dans la direction longitudinale et/ou sectionnelle, est formé à symétrie miroir.

10. Dispositif de protection des jantes selon au moins l'une des revendications précédentes, **caractérisé par le fait que** le dispositif de protection des jantes (9) présente plusieurs nervures de renforcement (19), qui sont prévues au niveau des parois intérieures des branches latérales (11, 12).

11. Dispositif de protection des jantes selon la revendication 10, **caractérisé par le fait que** plusieurs, par exemple deux, nervures de renforcement (19) parallèles et à distance régulière entre elles sont prévues au niveau de chaque branche latérale (11, 12), qui se prolongent de l'arête biseautée (16) de chaque branche latérale (11, 12) dans la direction de l'entretoise médiane (10) et sont constituées sur l'entretoise médiane (10) en formant un bord vertical.

12. Dispositif de transport d'un véhicule automobile dans une installation de traitement de véhicules, comprenant :
- au moins une chaîne de transport sans fin guidée dans le sens longitudinal de l'installation de traitement de véhicules (2, 3) ; et
- au moins un dispositif de protection des jantes (9) destiné à protéger la jante de véhicule automobile pendant le processus de transport du véhicule automobile, le dispositif de protection des jantes (9) étant adapté de telle sorte à la forme d'un maillon associé (5, 6) d'au moins une chaîne de transport (2, 3) que le dispositif de protection des jantes (9) est clipsable de manière couvrante sur le maillon associé (5, 6) dans au moins les zones de surface pouvant venir en contact avec la jante de véhicule automobile du maillon associé (5, 6),
**caractérisé par le fait que** le dispositif de protection des jantes (9) présente une entretoise médiane (10) essentiellement plate et deux branches latérales (11, 12) formées essentiellement plates sur l'entretoise, l'entretoise médiane (10) et les branches latérales (11, 12) formant une zone de logement à la section en forme de U (13) destinée à loger un maillon associé (5, 6) d'au moins une chaîne de transport (2, 3), la branche latérale (11, 12) étant formée légèrement flexible et précontrainte par ressort dans la direction de la zone de logement (13), chaque branche latérale (11, 12) présentant dans la zone de chaque section en saillie (14) une ouverture (15) destinée à loger une tête de boulon associée (7) du maillon associé (5, 6) et chaque ouverture (15) étant adaptée de telle sorte à la forme de la tête de boulon associée (7) qu'un logement approximativement ajusté de chaque tête de boulon (7) est réalisé.

13. Dispositif selon la revendication 12, **caractérisé par le fait qu'**un dispositif de protection des jantes (9) selon au moins une des revendications précédentes est prévu sur chaque deuxième maillon (5, 6) de la chaîne de transport (2, 3).

14. Dispositif selon la revendication 12 ou 13, **caractérisé par le fait que** le dispositif de protection des jantes (9) forme approximativement une terminaison latéralement affleurante avec le maillon associé.
